# DEMANDE DE BREVET EUROPEEN

(11) **EP 0 889 275 A1**
(43) Date de publication de la demande: **07.01.1999**
(21) Numéro de dépôt: 98401398.7
(22) Date de dépôt: 10.06.1998
(51) Int. Cl.: F16L 47/06, F16L 33/18, F16L 47/04, F16L 11/12

(54) **Dispositif de connexion étanche d'un tube ou d'un tuyau sur un embout tubulaire**

(30) Priorité: 30.06.1997 FR 9708200
(71) Demandeur: HUTCHINSON, F-75008 Paris (FR)
(72) Inventeur: Andre, Maxime, 45330 Chateaurenard (FR); Godeau, Denis, 45260 Vieilles Maisons (FR)
(74) Mandataire: Ramey, Daniel

(57) **Abrégé**

Dispositif de connexion étanche d'un tube ou tuyau (10) sur un embout tubulaire (16), l'extrémité (12) du tube ou tuyau (10) étant élargie radialement et recouverte intérieurement d'une couche d'étanchéité (14) en caoutchouc ou analogue, surmoulée ou emboitée sur l'extrémité (12) du tube ou tuyau (10).

L'invention s'applique notamment aux tubes ou tuyaux de transfert de fluide pour l'industrie automobile.

## Description

L'invention concerne un dispositif de connexion étanche d'un tube ou tuyau sur un embout tubulaire, ce dispositif étant applicable notamment à des tuyaux de transfert de fluide pour véhicule automobile, tels par exemple que des tuyaux de carburant, de liquide de refroidissement, d'huile, d'air, de retour basse-pression dans un circuit de direction assistée, etc... et applicable également à des tuyaux de gaz (gaz de ville ou analogue) pour des installations de chauffage, de cuisson, etc...

Les tuyaux réalisés en certaines matières relativement rigides (métal ou matière plastique telle qu'un polyamide par exemple) ont l'avantage d'une bonne imperméabilité aux fluides transportés, mais leurs connexions nécessitent pour une bonne étanchéité l'utilisation de raccords spéciaux, de préférence encliquetables et comprenant en général un ou plusieurs joints toriques, ces raccords étant coûteux.

D'autres dispositifs plus simples de connexion peuvent être utilisés, notamment des colliers de serrage, mais au détriment de la qualité de l'étanchéité de la connexion.

L'invention a pour objet un dispositif de connexion étanche pour tube ou tuyau du type précité en matière relativement rigide, ce dispositif étant simple, fiable, bon marché et applicable à tous les types de tubes et tuyaux précités.

Elle propose, à cet effet, un dispositif de connexion étanche d'un tube ou tuyau sur un embout tubulaire, l'extrémité du tube ou tuyau à monter sur l'embout étant élargie radialement et sa surface interne étant recouverte d'une couche d'étanchéité en une matière élastiquement déformable telle par exemple que du caoutchouc ou analogue, caractérisé en ce que la surface interne de l'extrémité élargie du tube ou tuyau comporte des fentes, encoches, rainures ou analogues qui se terminent sur la face frontale d'extrémité du tube ou tuyau et facilitent l'expansion radiale de cette extrémité lors de son montage sur l'embout.

La couche de matière d'étanchéité qui recouvre la surface interne de l'extrémité élargie du tube ou du tuyau suffit à assurer une étanchéité de qualité quand le tube ou tuyau est monté sur un embout tubulaire, en particulier lorsque celui-ci comporte sur sa surface extérieure des nervures annulaires en "sapin", ou une saillie en "olive" ou analogue.

La matière d'étanchéité précitée peut recouvrir également la surface extérieure de l'extrémité élargie du tube ou tuyau.

Avantageusement, la matière d'étanchéité est surmoulée sur l'extrémité du tube ou du tuyau.

Elle peut aussi être fixée par collage ou par soudure, ou être emboîtée sur cette extrémité.

Selon une autre caractéristique de l'invention, ce dispositif comprend également un élément de fixation mécanique sur l'embout, cet élément étant associé au tube ou tuyau et comportant des moyens coopérant avec l'embout, par exemple par vissage, encliquetage élastique, ou autre.

Dans un mode de réalisation préféré de l'invention, cet élément de fixation comporte une partie annulaire entourant le tube ou tuyau et des pattes longitudinales qui s'étendent depuis la partie annulaire et forment des moyens d'encliquetage par coopération avec des moyens appropriés de l'embout, tels par exemple qu'une nervure annulaire de la surface extérieure de celui-ci.

Cet élément de fixation a pour fonction de retenir l'extrémité élargie du tube ou tuyau sur l'embout tubulaire, par exemple lorsque le tuyau et/ou l'embout sont soumis à des forces de sens opposés tendant à les séparer l'un de l'autre.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un mode de réalisation du dispositif selon l'invention ;
- la figure 2 est une vue schématique en coupe axiale d'un embout tubulaire destiné à coopérer avec le dispositif de la figure 1 ;
- la figure 3 est une vue schématique en coupe axiale, à plus petite échelle, de l'extrémité élargie du tube ou du tuyau ;
- la figure 4 est une vue schématique en coupe axiale d'une variante de réalisation de l'extrémité du tube ou du tuyau ;
- la figure 5 est une vue schématique partielle en coupe d'une variante de réalisation de l'embout ;
- la figure 6 est une vue schématique partielle en coupe d'une variante de réalisation du dispositif selon l'invention.

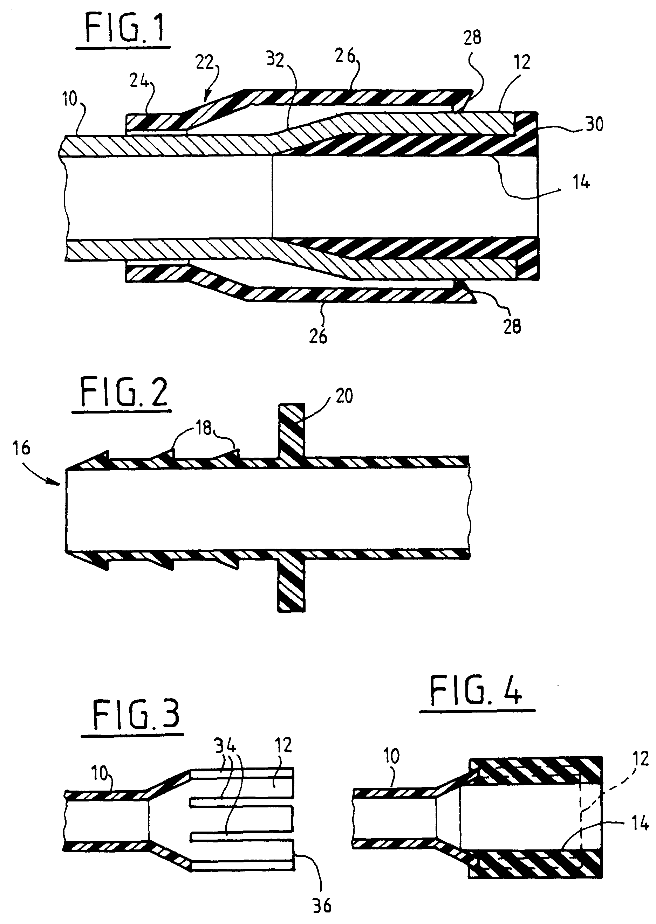

Le dispositif représenté schématiquement en figure 1 comprend essentiellement un tube ou tuyau 10 de matière relativement rigide, par exemple de métal ou de matière plastique mono- ou multi-couche telle qu'un polyamide par exemple, dont l'extrémité 12 est élargie radialement sur une certaine longueur axiale, la surface interne de cette extrémité élargie 12 étant recouverte d'une couche d'étanchéité 14 en une matière élastiquement déformable telle que du caoutchouc, un élastomère ou analogue.

L'extrémité 12 du tube 10 ainsi garnie de la couche d'étanchéité 14 est destinée à être montée sur un embout tubulaire 16 tel que celui représenté en figure 2, réalisé en une matière relativement rigide telle que du métal ou une matière plastique et dont la surface extérieure peut comporter, pour améliorer l'étanchéité et la fixation, des nervures annulaires 18 en "sapin" ou analogues.

Selon les modes de réalisation, le diamètre intérieur de la couche d'étanchéité 14 est sensiblement égal ou légèrement supérieur ou légèrement inférieur au diamètre interne du reste du tube ou tuyau 10, l'épaisseur de la couche 14 étant suffisante pour assurer une étanchéité de bonne qualité lorsque l'extrémité élargie 12 du tube ou tuyau 10 est montée sur l'embout tubulaire 16.

Le diamètre intérieur de l'embout 16 correspond sensiblement à celui du tube 10, son diamètre extérieur maximum (au niveau des sommets des nervures 18) étant déterminé en fonction du diamètre interne de l'extrémité élargie 12 du tube ou tuyau 10 et de l'épaisseur de la couche 14.

Une butée telle qu'une nervure annulaire 20 peut également être formée en saillie sur la surface extérieure de l'embout 16, pour définir une position limite d'enfoncement de l'embout 16 à l'intérieur de l'extrémité élargie 12 du tube ou tuyau 10.

Pour des raisons d'étanchéité, la couche 14 peut également recouvrir la face frontale d'extrémité de la partie élargie 12 du tube ou tuyau 10, comme représenté en figure 1, de telle sorte qu'au montage du tube ou tuyau 10 sur l'embout 16, une couche de matière d'étanchéité soit serrée entre la face frontale d'extrémité du tube ou tuyau et la butée annulaire 20 de l'embout 16.

La butée annulaire 20 peut également coopérer avec un élément 22 de fixation qui est associé au tube ou tuyau 10 et qui, dans l'exemple de réalisation représenté, comprend une partie annulaire 24 entourant avec jeu le tube ou tuyau 10 et formée avec deux pattes longitudinales 26 qui s'étendent sur une certaine longueur à partir de la bague annulaire 24 en direction de l'extrémité élargie 12 du tube ou tuyau 10 et qui se terminent par des becs d'accrochage 28 orientés l'un vers l'autre.

Cet élément de fixation est utilisé de la façon suivante :

Lorsque la partie élargie 12 du tube ou tuyau 10 est montée sur l'embout 16 et enfoncée complètement sur celui-ci, le rebord 32 de la couche d'étanchéité 14 venant s'appliquer sur la butée annulaire 20 de l'embout, l'élément de fixation 22 est déplacé par translation ou coulissement sur le tube ou tuyau lisse et avancé en direction de cette butée annulaire 20, jusqu'à ce que les becs d'accrochage 28 glissent sur la périphérie de cette butée et passent de l'autre côté de celle-ci en venant s'accrocher sur la butée.

La longueur des pattes 28 peut être déterminée de façon telle que, dans cette position d'accrochage, la bague annulaire 24 de l'élément 22 soit sensiblement en appui ou en butée sur l'extrémité tronconique 32 de la partie élargie 12 du tube ou tuyau 10, ce qui empêche cette partie élargie de se déplacer sur l'embout 16.

L'élément 22 est réalisable en toute matière présentant une certaine rigidité, par exemple en métal ou en matière plastique telle que du polyamide, dès lors que les pattes 26 présentent une élasticité suffisante pour remplir leur fonction d'encliquetage élastique.

La matière de la couche 14 est à base de caoutchouc, d'élastomère ou de thermoplastique réticulable, choisi pour sa résistance au fluide transporté.

Comme cela est bien visible en figure 3, la partie élargie 12 du tube ou tuyau 10 est formée avec des fentes, encoches ou rainures 34 qui, dans l'exemple représenté, sont orientées longitudinalement et se terminent sur la face frontale d'extrémité 36 du tube ou tuyau 10.

Ces fentes ou rainures 34 sont formées dans toute l'épaisseur de la partie élargie 12 et débouchent à la fois sur la surface intérieure et sur la surface extérieure de cette partie élargie. Elles ont une double fonction, qui est d'assurer l'ancrage mécanique de la couche d'étanchéité 14 et d'augmenter la capacité de déformation radiale de la partie élargie 12 du tube ou tuyau 10.

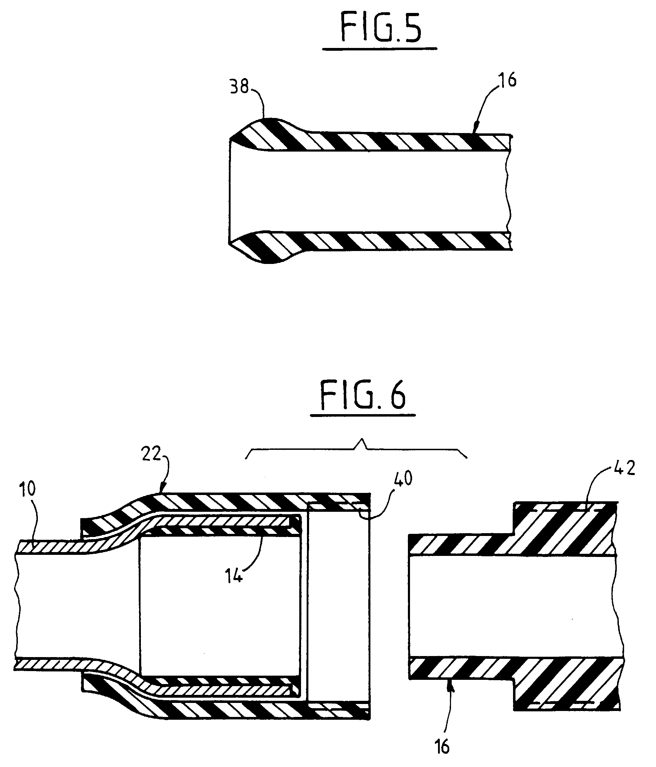

Comme représenté en figure 4, la couche d'étanchéité 14, avantageusement réalisée par surmoulage, peut remplir les fentes ou rainures 34 et s'ancrer mécaniquement ainsi sur la partie élargie 12.

La couche d'étanchéité 14 peut également recouvrir la surface extérieure de la partie élargie 12 du tube ou tuyau 10.

On peut aussi utiliser, en variante, un fourreau, un manchon ou analogue de matière d'étanchéité que l'on vient emboîter dans ou sur l'extrémité élargie 12 du tube ou tuyau 10 pour former la couche 14.

Pour améliorer l'étanchéité, notamment quand l'embout tubulaire 16 ne comprend pas de nervures annulaires 18 en "sapin", on peut former des nervures annulaires en saillie sur la face interne de la couche d'étanchéité 14.

On peut aussi fixer la couche d'étanchéité 14 dans la partie élargie 12 par collage, au moyen d'un adhésif, ou par une soudure résultant du surmoulage lorsque les matières de la couche d'étanchéité 14 et du tube ou tuyau 10 présentent une certaine affinité ou compatibilité chimique.

Les fentes, rainures, encoches ou analogues 34 de la partie élargie 12 du tube ou tuyau peuvent avoir des formes très diverses. Elles peuvent être formées uniquement dans la face interne de cette partie élargie 12, ou bien traverser toute l'épaisseur de cette partie élargie 12, s'étendre jusqu'à la face frontale d'extrémité 36 du tube ou du tuyau 10 ou bien s'arrêter à une certaine distance de cette face frontale d'extrémité, etc... Leur nombre est par exemple compris entre 4 et 6 ou 8, mais une ou deux fentes suffiraient pour assurer l'ancrage mécanique de la couche d'étanchéité 14.

Typiquement, l'épaisseur de cette couche d'étanchéité 14 peut varier de 0,5 millimètre environ à quelques millimètres en fonction de l'application envisagée.

Si nécessaire, et notamment dans le cas d'un tube ou tuyau en matière plastique, la fixation de la partie élargie 12 du tube ou du tuyau sur l'embout pourrait être renforcée par un collier de serrage par une bague à retrait, par sertissage, par surmoulage de matière plastique ou tout autre moyen analogue (en particulier lorsqu'on n'utilise pas d'élément de fixation 22).

Dans la variante de réalisation de la figure 5, l'embout 16 est formé avec une extrémité 38 en olive et ne comprend alors pas les nervures 18 de l'exemple de réalisation de la figure 2.

Dans la variante de réalisation de la figure 6, l'élément de fixation 22 est de forme cylindrique et comporte un filetage 40 sur sa surface interne au voisinage de son extrémité libre, pour sa fixation par vissage sur une partie cylindrique filetée 42 de l'embout 16, cette fixation pouvant être du type rapide par rotation de l'élément 22 sur un quart de tour ou sur un demi-tour.

## Revendications

1. Dispositif de connexion étanche d'un tube ou tuyau sur un embout tubulaire, l'extrémité du tube ou tuyau (10) à monter sur l'embout (16) étant élargie radialement et sa surface interne étant recouverte d'une couche d'étanchéité (14) en une matière élastiquement déformable telle par exemple que du caoutchouc ou analogue, caractérisé en ce que la surface interne de l'extrémité élargie (12) du tube ou tuyau comporte des fentes, encoches, rainures ou analogues (34) qui se terminent sur la face d'extrémité frontale du tube ou tuyau (10) et facilitent l'expansion radiale de son extrémité élargie (12) lors du montage sur l'embout (16).

2. Dispositif selon la revendication 1, caractérisé en ce que les fentes, encoches, rainures ou analogues (34) débouchent sur la surface extérieure de l'extrémité élargie (12) du tube ou tuyau.

3. Dispositif selon l'une des revendications précédentes, caractérisé en ce que la couche d'étanchéité recouvre également la surface externe de l'extrémité élargie (12) du tube ou tuyau (10).

4. Dispositif selon l'une des revendications précédentes, caractérisé en ce que qu'il comprend un élément (22) de fixation mécanique sur l'embout (16), cet élément (22) étant associé au tube ou tuyau (10) et comportant des moyens (26, 28, 40) coopérant avec l'embout (16) par encliquetage élastique, vissage ou autre.

5. Dispositif selon la revendication 4, caractérisé en ce que l'élément de fixation (22) comporte une partie annulaire (24) entourant le tube ou tuyau et des pattes longitudinales s'étendant depuis la partie annulaire (24) et formant des moyens d'encliquetage par coopération avec des moyens appropriés (20) de l'embout, tels par exemple qu'une nervure ou butée annulaire de la surface extérieure de celui-ci.

6. Dispositif selon la revendication 4, caractérisé en ce que l'élément de fixation (22) comporte une partie cylindrique filetée (40) coopérant par vissage avec une partie filetée (42) de l'embout (16).

7. Dispositif selon l'une des revendications précédentes, caractérisé en ce que la couche d'étanchéité (14) est surmoulée ou emboitée sur l'extrémité élargie (12) du tube ou tuyau (10).

8. Dispositif selon l'une des revendications 1 à 6 précédentes, caractérisé en ce que la couche d'étanchéité est fixée à l'extrémité élargie (12) du tube ou tuyau par collage ou par soudure.

9. Dispositif selon l'une des revendications précédentes, caractérisé en ce que le tube ou tuyau (10) est en matière plastique et est destiné à être utilisé pour le transfert de fluide, en particulier dans l'industrie automobile.

10. Dispositif selon l'une des revendications 1 à 8, caractérisé en ce que le tube ou tuyau (10) est métallique.
